(19) Europäisches Patentamt / European Patent Office / Office européen des brevets

(11) **EP 4 440 848 B1**

(12) **EUROPEAN PATENT SPECIFICATION**

(45) Date of publication and mention
of the grant of the patent:
**29.04.2026 Bulletin 2026/18**

(51) International Patent Classification (IPC):
*B60C 1/00* *(2006.01)*    *B60C 7/14* *(2006.01)*
*B60C 7/18* *(2006.01)*

(21) Application number: **21835503.0**

(52) Cooperative Patent Classification (CPC):
**B60C 1/0025; B60C 1/00; B60C 7/143;
B60C 7/146; B60C 7/18**

(22) Date of filing: **02.12.2021**

(86) International application number:
**PCT/US2021/061590**

(87) International publication number:
**WO 2023/101675 (08.06.2023 Gazette 2023/23)**

(54) **NON-PNEUMATIC WHEEL**

NICHTPNEUMATISCHES RAD

ROUE NON PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**09.10.2024 Bulletin 2024/41**

(73) Proprietor: **COMPAGNIE GENERALE DES
ETABLISSEMENTS MICHELIN
63000 Clermont-Ferrand (FR)**

(72) Inventors:
• **WILSON, Clifford
Greenville, South Carolina 29605 (US)**
• **BOHN, JR., Clayton
Greenville, South Carolina 29605 (US)**

(74) Representative: **Casalonga
Casalonga & Partners
Bayerstraße 71/73
80335 München (DE)**

(56) References cited:
**US-A1- 2020 276 866    US-A1- 2020 290 398**

**Description**

BACKGROUND OF THE INVENTION

Field of the Invention

This invention relates generally to a support structure for a tire and more specifically, to useful rubber compositions for forming the structure.

Description of the Related Art

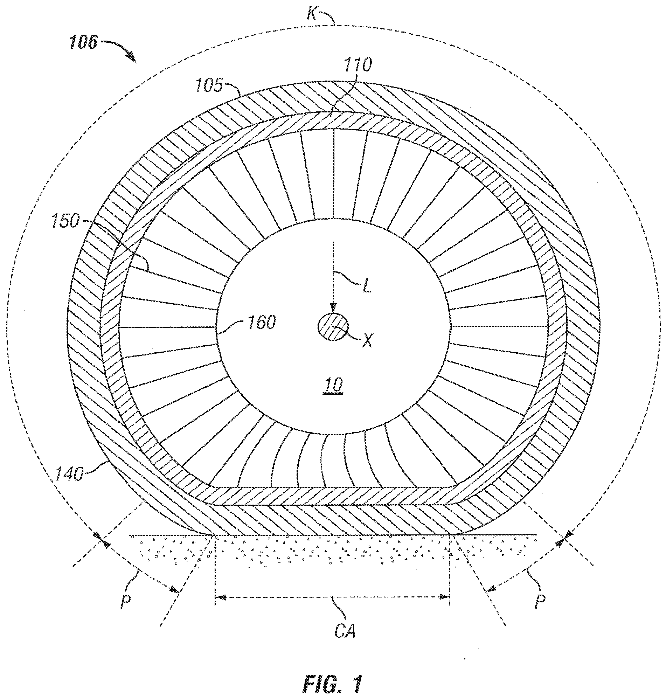

The details and benefits of non-pneumatic tire constructions are described *e.g.,* in U.S. Pat. Nos. 6,769,465; 6,994,134; 7,013,939; and 7,201,194. Certain non-pneumatic tire constructions propose incorporating a shear band and spokes, embodiments of which are described in *e.g.,* U.S. Pat. Nos. 7,201,194. Such non-pneumatic tires provide advantages in tire performance without relying upon a gas inflation pressure for support of the loads applied to the tire. Known non-pneumatic wheels are disclosed in US 2020/276866 A and US 2020/290398 A.
By way of background, FIG. **1** provides a cross-sectional view of an exemplary embodiment of a non-pneumatic tire **106** incorporating a shear band **110**. Tire **106** also includes a plurality of tension transmitting elements, illustrated as web spokes **150,** extending transversely across and inward from shear band **110**. A mounting band **160** is disposed at the radially inner end of the web spokes. The mounting band **160** anchors the tire **106** to a hub **12.** A tread portion **105** is formed at the outer periphery of the shear band **110** and may include *e.g.*, grooves or ribs thereon.
The shear band **110** of tire **106** includes a shear layer as well as an innermost reinforcement layer adhered to the radially innermost extent of the shear layer and an outermost reinforcement layer adhered to the radially outermost extent of the shear layer. The reinforcement layers have a tensile stiffness that is greater than the shear stiffness of the shear layer so that the shear band undergoes shear deformation under vertical load.
Work continues to provide non-pneumatic tires with improved properties, such as wear, handling, noise and durability just as such improvements are sought in pneumatic tires.

SUMMARY OF THE INVENTION

The present invention provides a non-pneumatic wheel as defined in claim 1.
Preferred embodiments are defined in the dependent claims.
The foregoing and other objects, features and advantages of the invention will be apparent from the following more detailed descriptions of particular embodiments of the invention, as illustrated in the accompanying drawing wherein like reference numbers represent like parts of the invention.

BRIEF DESCRIPTION OF THE DRAWINGS

A full and enabling disclosure of the present invention, including the best mode thereof, directed to one of ordinary skill in the art, is set forth in the specification, which makes reference to the appended figures, in which:

FIG. **2** provides a lateral side view of an exemplary embodiment of the present invention wherein a plurality of resilient composite structures are configured as spokes forming a part of a tire under nominal loading conditions.
FIG. **3** provides a lateral side view of an exemplary embodiment of the present invention wherein a plurality of resilient composite structures are configured as spokes forming a part of a tire under greater than nominal loading conditions.
FIG. **4** provides a perspective view of an exemplary embodiment of the present invention configured as a spoke.
FIG. **5** provides a frontal view of the exemplary embodiment of the spoke.
FIG. **6** provides a section view taken on line 5-5 of FIG. **5** showing an equatorial section view of the exemplary embodiment.
FIG. **7** provides a section view of an embodiment of the present invention forming a part of a tire, the embodiment in an unloaded state (shown in solid lines) and under nominal loading conditions in compression (shown in dashed lines).
FIG. **8** provides a section view of an embodiment of the present invention forming a part of a tire, the embodiment in an unloaded state (shown in solid lines) and under nominal loading conditions in tension (shown in dashed lines).
FIG. **9** provides a perspective view of an exemplary embodiment of the spoke of the present invention with portions removed to show an embodiment's components including reinforcement location and orientation having two rubber coatings on the legs and a heel portion.
FIG. **10** provides an equatorial section view of an alternative embodiment of the invention.
FIG. **11** provides a section view of the alternative embodiment of the present invention forming a part of a tire, the embodiment in an unloaded state (shown in solid lines) and under nominal loading conditions in compression (shown in dashed lines).

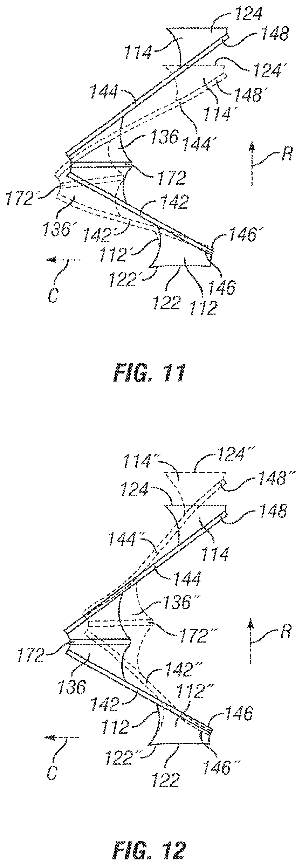

.FIG. **12** shows a section view of the alternative embodiment of the present invention forming a part of a tire, the embodiment in an unloaded state (shown in solid lines) and under nominal loading conditions in tension (shown in dashed lines).

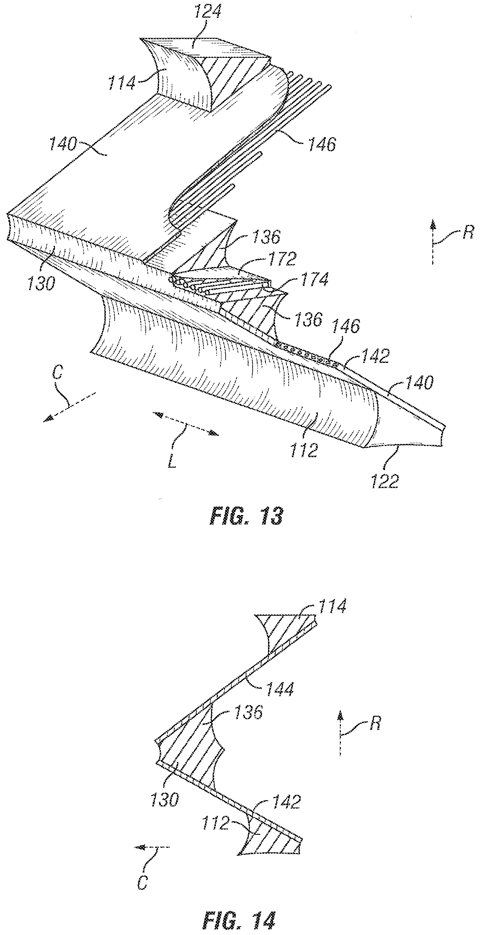

FIG. **13** shows a perspective view of the alternative exemplary embodiment of the spoke of the present invention with portions removed to show the embodiment's components including reinforcement location and orientation.

FIG. **14** shows an equatorial section view of another exemplary alternative embodiment of the invention.

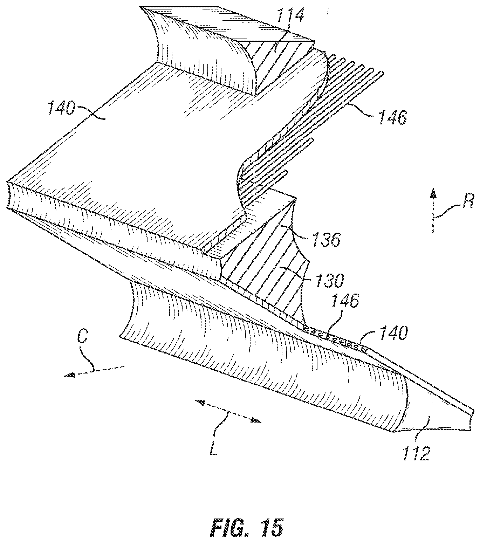

FIG. **15** shows a perspective view of the alternative exemplary embodiment of the spoke of the present invention with portions removed to show the embodiment's components including reinforcement location and orientation.

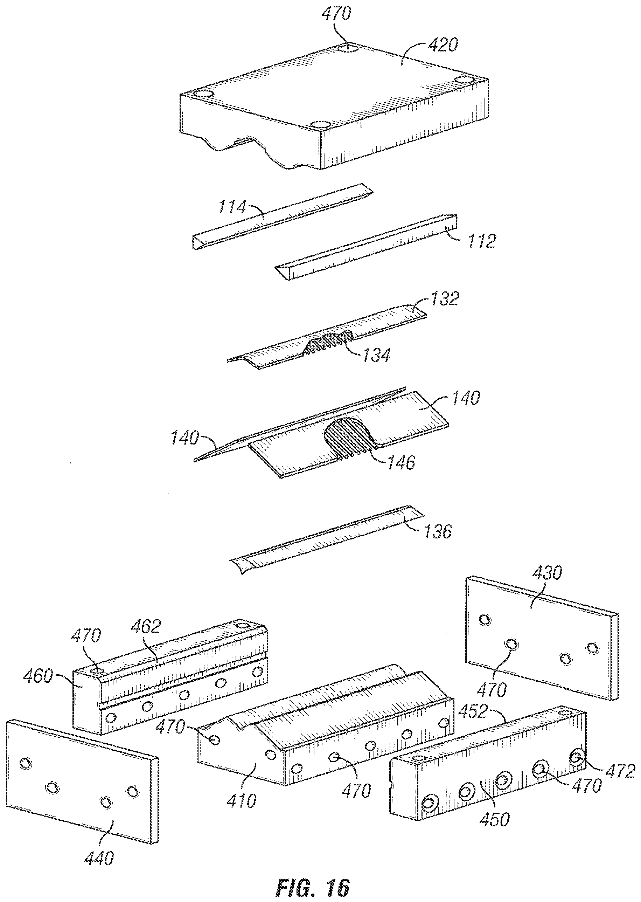

FIG. **16** provides a perspective view of an exemplary embodiment of a mold used for forming a spoke embodiment of the invention. The resilient composite structure's components are shown, with some components having a portion of the elastic material removed to show reinforcement location and orientation.

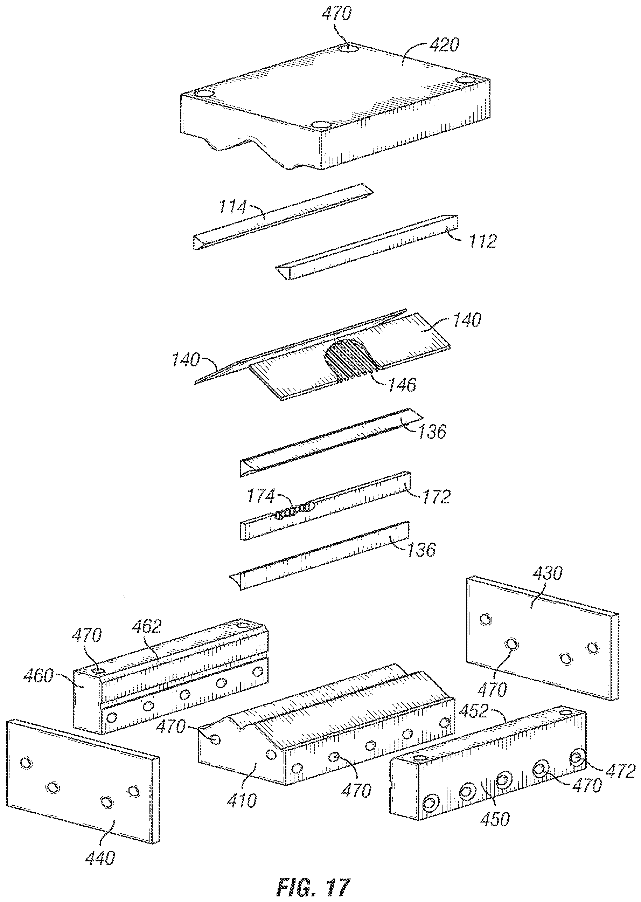

FIG. **17** provides a perspective view of an alternative exemplary embodiment of a mold used for forming an alternative spoke embodiment of the invention. The resilient composite structure's components are shown, with some components having a portion of the elastic material removed to show reinforcement location and orientation.

The use of identical or similar reference numerals in different figures denotes identical or similar features.

DETAILED DESCRIPTION OF PARTICULAR EMBODIMENTS

Embodiments of the present invention include spokes that are useful for non-pneumatic tires and more specifically, spokes that are formed at least in part of an elastomeric material, such as rubber. As noted above, the concept of non-pneumatic tires that use spokes to transmit a load between the hub and the outer tread band is well known in the industry. An improvement to the spokes that are disclosed herein provides increased durability and reduced rolling resistance for a non-pneumatic tire- and therefore improved fuel economy - when included in a non-pneumatic tire.

More generally embodiments of the present invention provide a mechanical structure for resiliently supporting a load. As described more fully below, the spokes disclosed herein have a V-shaped form and extend between a hub and a band; typically embodiments of non-pneumatic tires may include an outer band having the shear band and the tread. Each leg or support element forming the V-shaped spoke includes a coating of a rubber composition and in particular embodiments, the proximal end of each leg is attached to the hub or tread band, respectively, with an elastomeric joint body formed of an ultra-low hysteresis rubber composition. An ultra-low rubber composition also forms an elastomeric joint body that is positioned within the V-shaped interior angle of the spoke that connects the distal ends of the legs, *i.e.,* the ends opposite to the proximal ends.

As previously noted, the spokes disclosed herein provide improved rolling resistance and improved durability of a non-pneumatic tire over other materials that have been found to be suitable for use in making spokes for non-pneumatic tires. To further improve the durability, particular embodiments of the present invention may further provide that the elastomeric joint bodies that attach the proximal ends of the spokes to the hub and band include a heel that is formed at their proximal ends and manufactured of a rubber composition as further discussed below.

For purposes of describing the invention, reference now will be made in detail to embodiments and/or methods of the invention, one or more examples of which are illustrated in or with the drawings. Each example is provided by way of explanation of the invention, not limitation of the invention. In fact, it will be apparent to those skilled in the art that various modifications and variations can be made in the present invention without departing from the scope of the invention as defined in the appended claims. For instance, features or steps illustrated or described as part of one embodiment, can be used with another embodiment or steps to yield a still further embodiments or methods. Thus, it is intended that the present invention covers such modifications and variations as come within the scope of the appended claims.

The following terms are defined as follows for this disclosure:

"Axial direction" or the letter "A" in the figures refers to a direction parallel to the axis of rotation of for example, the shear band, tire, and/or wheel as it travels along a road surface.

"Radial direction" or the letter "R" in the figures refers to a direction that is orthogonal to the axial direction and extends in the same direction as any radius that extends orthogonally from the axial direction.

"Equatorial plane" means a plane that passes perpendicular to the axis of rotation and bisects the outer tread band and/or wheel structure.

"Circumferential direction" or the letter "C" in the figures refers to a direction is orthogonal to the axial direction and orthogonal to a radial direction.

"Forward direction of travel" or the letter "F" in the figures refers to the direction the tire was designed to predominantly travel in for aesthetics and or performance reasons. Travel in a direction different than the forward direction of travel is possible and anticipated.

"Direction of rotation" or the letter "D" in the figures refers to the direction the tire was designed to predominantly rotate in for aesthetics and/or performance reasons. Rotation in a direction opposite than the direction of rotation is possible and anticipated.

"Radial plane" means a plane that passes perpendicular to the equatorial plane and through the axis of rotation of the wheel.

"Lateral direction" or the letter "L" means a direction that is orthogonal to an equatorial plane.

"Elastic material" or "Elastomer" as used herein refers to a polymer exhibiting rubber-like elasticity, such as a material comprising rubber.

"Elastomeric" as used herein refers to a material comprising an elastic material or elastomer, such as a material comprising rubber.

"Interior angle" or "Internal angle" as used herein means an angle formed between two surfaces that is greater than 0 degrees but less than 180 degrees. An acute angle, a right angle and an obtuse angle would all be considered "interior angles" as the term is used herein.

"Exterior angle" or "External angle" or "Reflex angle" as used herein means an angle formed between two surfaces that is greater than 180 degrees but less than 360 degrees.

"Deflectable" means able to be bent resiliently.

"Nominal load" or "desired design load" is a load for which the structure is designed to carry. More specifically, when used in the context of a wheel or tire, "nominal load" refers to the load for which the wheel or tire is designed to carry and operate under. The nominal load or desired design load includes loads up to and including the maximum load specified by the manufacturer and, in the case of a vehicle tire, often indicated by marking on the side of a the tire. A loading condition in excess of the nominal load may be sustained by the structure, but with the possibility of structural damage, accelerated wear, or reduced performance. A loading condition of less than nominal load, but more than an unloaded state, may be considered a nominal load, though deflections will likely be less than deflections at nominal load.

"Modulus" or "Modulus of elongation" (MPa) was measured at 10% (MA10) at a temperature of 23 °C based on ASTM Standard D412 on dumb bell test pieces. The measurements were taken in the second elongation; i.e., after an accommodation cycle. These measurements are secant moduli in MPa, based on the original cross section of the test piece.

As used herein, "phr" is "parts per hundred parts of rubber by weight" and is a common measurement in the art wherein components of a rubber composition are measured relative to the total weight of rubber in the composition, i.e., parts by weight of the component per 100 parts by weight of the total rubber(s) in the composition.

As used herein, "based upon" is a term recognizing that embodiments of the present invention are made of vulcanized or cured rubber compositions that were, at the time of their assembly, uncured. The cured rubber composition is therefore "based upon" the uncured rubber composition. In other words, the cross-linked rubber composition is based upon or comprises the constituents of the cross-linkable rubber composition.

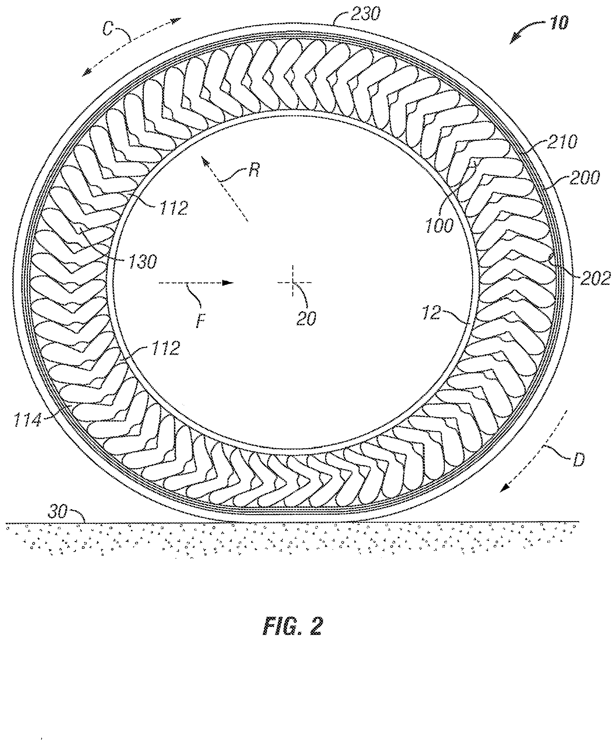

The Architecture of an Exemplary Non-Pneumatic Tire. FIG. **2** shows a lateral side view of an exemplary embodiment of the present invention wherein a plurality of resilient composite structures are configured as spokes **100** and are attached to an outer tread band **200** forming a part of a tire **10**. The tire **10** may be incorporated into a wheel. For example the tire **10** may be part of non-pneumatic wheel having a hub **12** which is attached to a passenger vehicle allowing the vehicle to roll across a ground surface. Other objects and vehicles may incorporate the invention, including but not limited to: heavy duty truck, trailer, light truck, off-road, ATV, bus, aircraft, agricultural, mining, bicycle, motorcycle and passenger vehicle tires. Such a non-pneumatic wheel would possess a hub **12** that would have a radially outer surface having an axis of revolution about a central axis **20.** The tire **10** may be attached to the hub **12** by any of a number of methods, for example, by mechanical fasteners such as bolts, screws, clamps or slots, and/or by adhesives such as cyanoacrylates, polyurethane adhesives, and/or by other bonding materials or a combination thereof.

The tire **10** shown here possesses an axis of rotation **20** about which the tire **10** rotates. In this exemplary embodiment, the radially outer surface **230** of the outer tread band **200** interfaces with a ground surface **30** over which the tire rolls. Under a nominal load, the spokes **100** of the tire flex as the tire enter and exit the contact patch. Smaller deflections occur in the spokes **100** as the spoke rotates about the axis **20** outside the contact patch, but most of the deflection occurs while the spoke **100** enters, exits and travels through the contact patch.

Each spoke **100** possesses a "nose" portion **130** which acts as a resilient hinge. The "nose" portion **130** is an elastomeric joint body connecting a support element forming the radially inner portion of the spoke and a support element forming the radially outer portion of the spoke. The support elements, or legs of the spoke **100** are initially positioned at an angle relative to each other. The angle between the spoke support elements measuring less than 180 degrees is the interior angle and the angle between the spoke support elements measuring greater than 180 degrees is the exterior angle. The elastomeric joint is comprised of an elastomer attached to each spoke support element and is positioned on the side of the spoke elements on the interior angle side.

The radially inner portion of the spoke possesses a radially inner foot **112** which connects to another surface, which is the radially outer surface of the hub **12** in the present embodiment. In the present embodiment, the radially inner foot **112** is comprised of an elastomeric joint body that connects the radially outer support to the hub **12.** The radially outer portion of the spoke **100** possesses a radially outer foot **114** which is comprised of another elastomeric body which connects the outer support element to yet another surface which is in the present embodiment the radially inner surface of the outer tread band **200.**

In the exemplary embodiment shown, the tread band **200** comprises an elastomeric material and allows deformation to form a planar footprint in the contact patch. In the exemplary embodiment shown, the radially outer foot **114** of the spoke **100** is attached to the radially inner surface **202** of the tread band **200** and to the opposite side of the support element from the nose portion **130.** In the exemplary embodiment shown, the spoke is adhered in place by an adhesive. In other embodiments, the spoke may be attached by other methods, including by adhering the elastomeric material together, for instance by using green rubber and curing the rubber components together, or using a strip of green rubber between cured or partially cured rubber components. In some embodiments, the outer tread band **200** may also possess a reinforcement to help carry the load circumferentially around the tire.

For this particular embodiment, the size of the tire 100 is similar to a pneumatic tire size of 215/45R17 with the lateral width of the tread being about 215 mm and having an outer tread band diameter of about 620 mm.

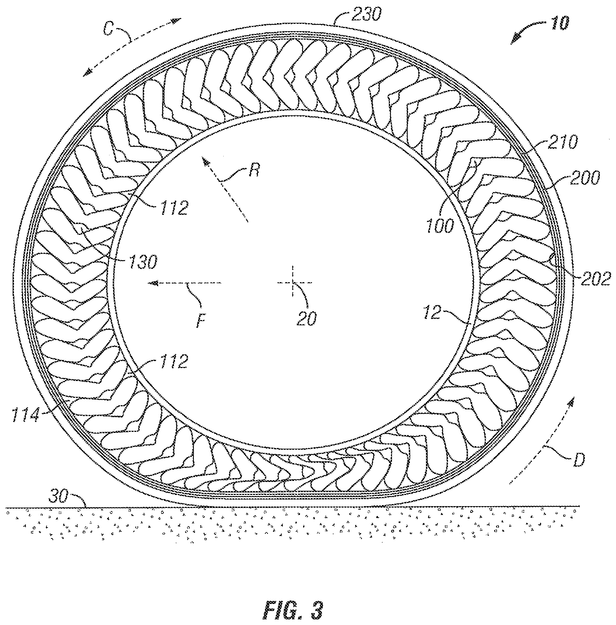

FIG. **3** shows the exemplary embodiment of the invention, configured as a spoke in a wheel **10,** where the embodiment is loaded in excess of its nominal load. In this particular instance, the tire was loaded with 1000 kg of mass load (approximately 9800 N force). In this case the deflection exceeded 20 mm and resulted in contact between the spoke nose portion **130** and spoke foot portions **110.** Under such conditions, the nose and foot portions may act as a "bump stop" unloading the leg portions of the spoke. The individual spokes **100** in this situation may make contact with one another as they enter, exit and or travel through the contact patch. The contact is illustrated as occurring between the nose portion **130** and the radially outer foot **114** where the spokes are entering the contact patch and contact is illustrated as occurring between the nose portion **130** and the radially inner foot portion **112** where the spokes are exiting the contact patch. While contact of an individual spoke with the spoke adjacent to it may occur, a portion of the load may be transferred in this case, through the radially inner foot **112,** through the nose portion of the spoke **130,** through the radially outer foot **114** and through the outer tread band **200** to the ground **30.** In a sense, the shape of the spokes of the present embodiment shown may act as a "bump stop" to prevent structural damage to the support elements or legs of the spoke connecting the feet **112, 114** with the nose **130** of the spoke. Such conditions of loading in excess of the nominal load could occur with overloading the vehicle with excess mass, or could occur if the tire encounters an obstacle, such as a curb, while traveling at high speed. While this particular embodiment behaves in this particular manner, other embodiments of the invention may behave differently, and may or may not exhibit "bump stop" qualities.

In the embodiment shown, the outer band **200** possesses reinforcement **210** to strengthen the outer band. A tread **230** is provided on the radially outer surface of the outer band 200.

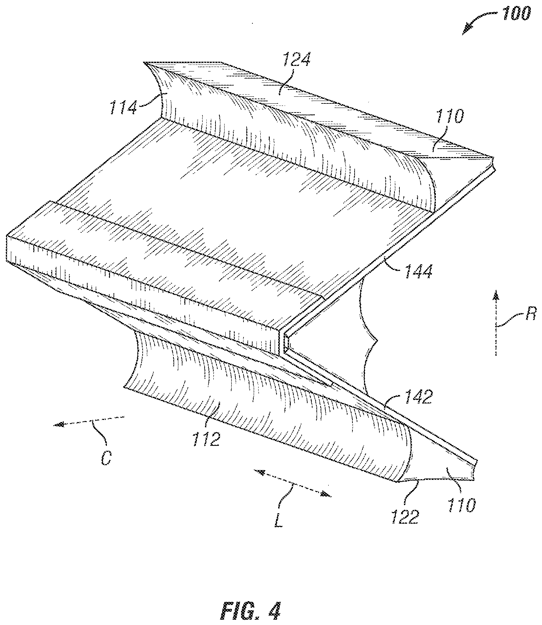

Spoke Construction. FIG. **4** provides a perspective view of the spoke **100** embodiment. In this particular embodiment, the spoke maintains a similar cross section profile in the lateral direction of the spoke. It can be seen that the feet **110,** both the radially inner foot **112** and radially outer foot **114,** each provide an attachment point to the hub **12** and outer band **200** of the wheel **10.** A widening in the circumferential direction at the radially inner end of the radially inner foot **112** provides circumferentially broad surface **122** for attachment, such as adhering, bonding and/or mechanically, to the hub **12.** Likewise a widening in the circumferential direction at the radially outer end of the radially outer foot **114** provides circumferentially broad surface **124** for attachment, such as adhering, bonding and/or mechanically, to the outer tread band **200.** The radially inner surface **122** and radially outer surface **124** in the embodiment shown are shown to be slightly curved in the circumferential direction of the spoke to match the radius of curvature of the hub and radially inner surface **202** of the outer band **200** at the location where the spoke attaches in the respective positions. Alternatively, the surface of the radially inner surface **122** and radially outer surface **124** may also be flat in the circumferential direction of the spoke.

The nose portion, or otherwise referred to as the "joint body" **130** of the spoke **100** of the embodiment shown is comprised of an elastomeric material and acts to connect a first and second support element, here comprising a radially inner leg **142** and a radially outer leg **144** respectively. The nose portion becomes thicker in the circumferential direction between the radially inner leg **142** and radially outer leg **144.** The circumferential direction of the spoke should be understood in this embodiment to be the same as the circumferential direction of the wheel **10.** In reference to a single spoke as shown in this embodiment, the circumferential direction is generally orthogonal to both the radial direction and the lateral direction.

It may be observed that the radially inner leg **142** is slightly shorter than the radially outer leg **144** in the embodiment shown. This difference in length accommodates the change in radius as the spoke travels through the contact patch maximizing the space available for the adjacent spokes to "nest."

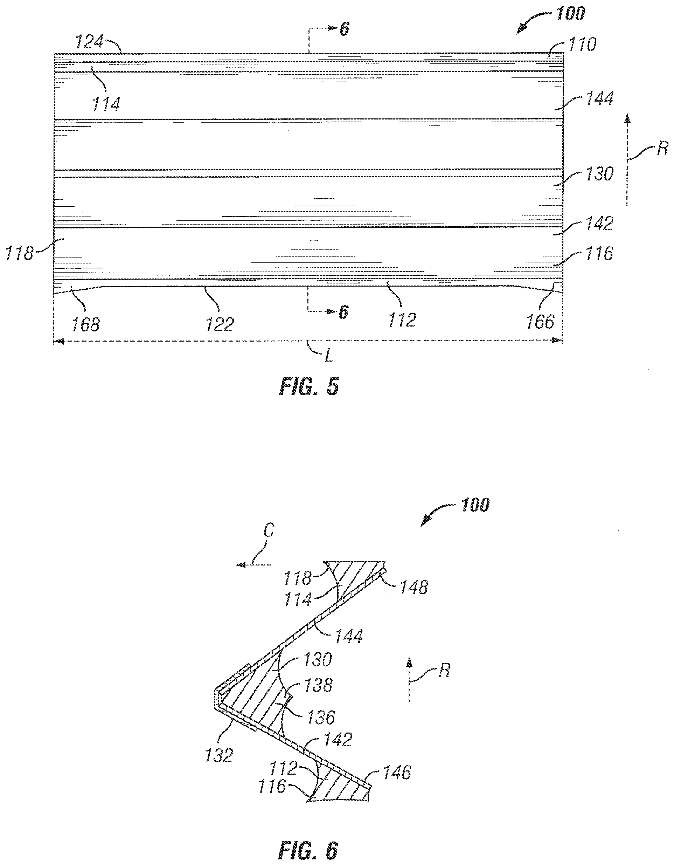

FIG. **5** shows a front view of the spoke in a circumferential direction. In this embodiment, the radially inner surface possesses a first and second protrusion **166, 168** which creates radially inner surface **122** that is curved in the lateral direction. This causes the cross section of the spoke **100** to vary slightly in the lateral direction. In alternative embodiments the spoke **100** may maintain an identical cross section in the lateral direction.

FIG. **6** shows a section view of the embodiment showing the main components of the spoke **100.** The spoke **100** of the embodiment shown is comprised of rubber of the general type used in the construction of conventional rubber pneumatic radial tires, polyester cord material and fiberglass reinforced resin. Particular embodiments that include more detailed materials information is provided below in the disclosure.

The rubber used in the embodiment shown comprises of a relatively soft rubber having a modulus of 4.8 MPa in the areas of the radially inner elastomeric joint body **112** and radially outer elastomeric joint body **114.** Each elastomeric joint body **112, 114** is attached to the radially inner leg **142** and radially outer leg **144** respectively. The radially inner leg **142** and radially outer leg **144** are constructed to give them flexural rigidity, that is, to allow them to resiliently deform when the spoke **100** is under compression or tension. The radially outer end **148** of the radially outer leg **144** is attached to the elastomeric joint body **114,** but in the embodiment shown is otherwise "free" and may move to compress or stretch the elastomeric joint body **114** when the spoke is being stretched or compressed. Likewise the radially inner end **146** of the radially inner leg **142** is attached to the elastomeric joint body **112,** but in the embodiment shown is otherwise "free" and may move to compress or stretch the elastomeric joint body **112** when the spoke **100** is under compression or tension. In alternative embodiments the radial inner ends **146** of the radially inner leg **142** may be retained by a reinforcement membrane, and otherwise not "free." In the same or yet other alternative embodiments the radially outer end **148** of the radially outer leg **144** may be retained by a reinforcement membrane and be otherwise not "free." The radially inner elastomeric joint body **112** becomes thicker in the circumferential direction nearer the hub **12** to which it is attached. In the embodiment shown, the elastomeric joint body **112** flairs outward forming a protrusion **116** nearest the hub **12.** Likewise, the radially outer elastomeric joint body **114** becomes thicker in the circumferential direction nearer the outer band **200** to which it is attached. In the embodiment shown, the elastomeric joint body **114** flairs outward forming a protrusion **118** nearest the outer band **200.**

In the embodiment shown, a membrane **132** is used to reinforce the nose section **130** of the spoke **100.** The membrane structure **132** of the embodiment shown is comprised of polyester fibers made from an 1100 by 2 cord with a pace of approximately 1 mm and a tensile modulus of approximately 3,750 MPa. Such reinforcement fibers are similar to that commonly used in the radial cords of a pneumatic tire. The rubber surrounding the reinforcements of the membrane has a modulus of approximately 5 MPa. For the embodiment shown, this rubber is of a type used in the construction of a conventional pneumatic radial tire. Alternatively, other membrane reinforcement materials may be used, including using chords of other materials, such as aramid, cotton, nylon or rayon or combinations thereof. Alternatively, the reinforcement pace, filament count, cord count and diameter may vary. In the embodiment shown, the reinforcement membrane **132** extends approximately one-fifth of the height of the spokes, generally co-extensive with the generally triangular shaped nose elastomeric joint body **136.** In the embodiment shown, the elastomeric joint body **136** thickens and flairs outward in the circumferential direction near the middle section between the radially inner and radially outer spoke legs **142, 144,** forming a protrusion **138** at approximately the midpoint of the elastomeric joint body **136.**

The reinforcement cords of the reinforcement membranes **132** of the exemplary embodiment are oriented generally in the radial direction along the length of the membranes.

The legs **142, 144** of the spoke **100** are comprised of fiber reinforced plastic reinforcements surrounded by a rubber to form a membrane. In particular embodiments, the leg membranes **142, 144** possess a flexural rigidity, for example, of approximately 140,000 N-mm$^2$. In this particular embodiment, the filaments have a diameter of approximately 1 mm with a pace of about 2 mm apart. The filaments of the particular embodiment shown are glass reinforced resin formed by pultrusion. The filaments of the embodiment have a modulus of approximately 10 MPa. Alternatively other reinforcements may be used, including carbon fiber such as graphite epoxy, glass epoxy or aramid reinforced resins or epoxy or combinations thereof. Unreinforced plastic reinforcements or metallic reinforcements may also be used, provided they have sufficient flexural rigidity for the nominal loads intended to be supported. Alternatively other pacing and other diameters diameter of the membranes and reinforcements may be used. The legs **142, 144** of the spoke **100** have a relatively large stiffness compared to the other components comprising the spoke **100.** The legs **142, 144** resist act resiliently and have a large bending stiffness allowing the nose portion **130** of the spoke to act as a joint body connecting the radially inner leg **142** with the radially outer leg **144.** The feet **112, 114** act as second and third joint bodies, connecting the radially inner leg **142** to the hub and the radially outer leg **144** with the outer band **200.**

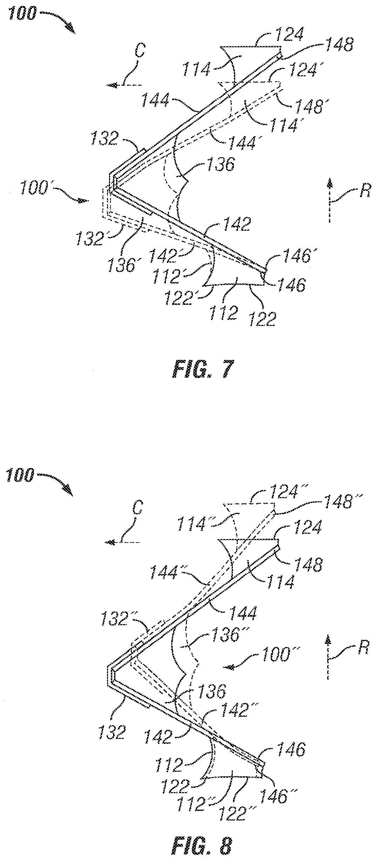

FIG. **7** shows a partial lateral section view of the exemplary embodiment of a spoke **100** that can be attached to an outer tread band **200** and hub **12** and forming a part of a tire **10.**

When the spoke **100** is deformed radially inward, undergoing compression between the radially outer foot **114** and radially inner foot **112,** the elastomeric joint body **136** of the nose **130** undergoes compression between the radially inner leg **142** and radially outer leg **144** of the spoke. The radially outer elastomeric joint body **114** of the radially outer foot **114** undergoes compression along the portion closest to the nose **130** and undergoes tension on the distal portion of the elastomeric joint body **114.**

Similarly at the radially inner foot **112,** when the spoke **100** is deformed radially inward, the elastomeric joint body **112** of the radially inner foot **112** undergoes compression along the portion closest to the nose **130** and undergoes tension on the distal portion of the elastomeric joint body **112.**

The dashed lines in FIG. **7** show the spoke **100'** undergoing compression between the radially outer foot **114'** and the radially inner foot **112'**. The compressed spoke **100'** is shown positioned with the hub mating surface **122, 122'** fixed in position while the radially outer foot **114, 114'** is displaced radially inward. As such, it may be observed that the radially inner portion **146, 146'** of the radially inner leg **142, 142'** is displaced radially outward when the spoke is compressed such that the radially inner portion **146'** of the radially inner leg **142'** moves radially outward relative to the radially inner surface **122'** of the radially inner foot **112'**. Likewise, a similar displacement occurs at the radially outer foot **114, 114'** with the radially outer portion **148, 148'** of the radially outer leg **144, 144'** is displaced radially inward when the spoke is compressed such that the radially outer portion **148'** of the radially outer leg **144'** moves radially inward relative to the radially outer surface **124'** of the radially outer foot **114'**. The construction of the spoke permitting displacement of the radially outer portion **148, 148'** of the radially outer leg **144, 144'** and radially inner portion **146, 146'** of the radially inner leg **142, 142'** is referred herein as having a "free" spoke end. Alternatively, the radially outer portion of the radially outer leg and/or the radially inner portion of the radially inner leg may have a reinforcement membrane extending along the proximal end of of inner or outer leg and extending around and along at least a portion of the radially outer surface of the radially outer foot or radially inner surface of the radially inner foot. This membrane acts to constrain the end of the spoke.

The nose portion **130** of the present embodiment possesses a reinforcement membrane **132** which constrains the radially inner portion of the radially outer spoke **144** and radially outer portion of the radially inner spoke **142,** restraining them from displacing away from one another when the spoke is under compression. The elastomeric joint body **136** undergoes compression when the spoke **100** is compressed. It may be observed that the portion of the elastomeric joint body **136** farthest from the reinforcement membrane **132** is contracted radially as the spoke **100** is compressed. The construction of the spoke disallowing displacement of the radially inner portion of the radially outer leg **144** and radially outer portion of the radially inner leg **142** may be referred herein as being "constrained" or "not free."

FIG. **8** shows the same embodiment when in tension such that the radially outer foot **114, 114"** is displaced away from the radially inner foot **112, 112"**. The spoke **100** shown generally unloaded in solid lines and also the spoke **100'** is shown in tension by the dashed lines. Note how the portions of the feet **112, 112", 114, 114"** which underwent compression when the spoke was in compression are undergoing tension when the spoke is undergoing tension as shown in the present figure. Likewise the portions of the elastomeric joint bodies of the feet **112, 112", 114, 114"** which underwent tension when the spoke was in compression are undergoing compression when the spoke is undergoing tension as shown in the present figure. The elastomeric joint body **136, 136"** of the nose portion **130, 130"** undergoes tension in the portion closest to the feet **112, 112", 114, 114"** of the spoke **100, 100"** .

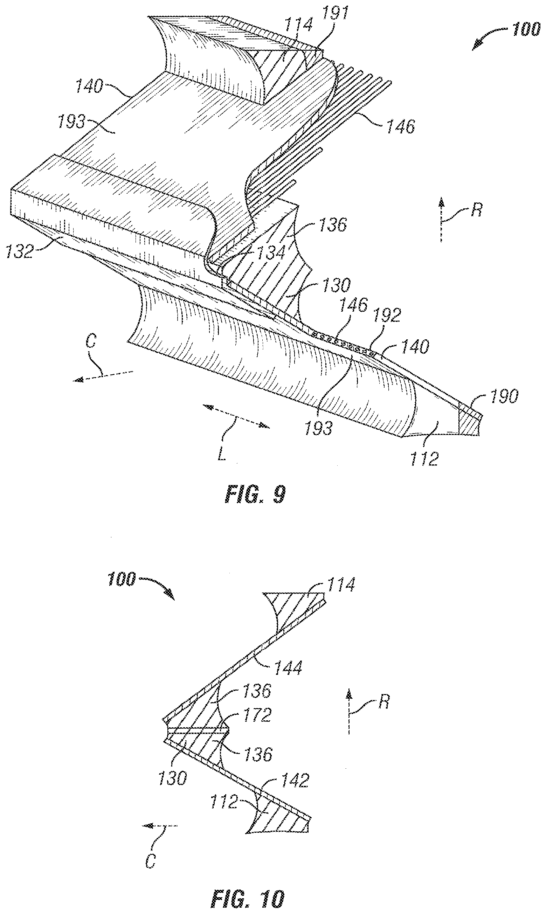

FIG. **9** shows a perspective cutaway view of the spoke embodiment and further provides an example of a spoke having a heel portion as well as having a spoke leg with two different rubber coatings. Portions of the reinforcement **134** of the nose reinforcement membrane **132** are shown, as well as a portion of the elongated leg reinforcements **146** of the leg **140** and a part of the foot reinforcements of the foot reinforcement membrane are shown as well. The reinforcement of the nose membrane are shown oriented generally in the radial direction and wrapped around the nose **130** of the spoke **100**. The support element **140** reinforcements **146** are shown as elongated reinforcements oriented generally in the radial direction along the length of the support elements **140.**

FIG. **9** further shows an example of an embodiment that includes a heel portion with two different rubber coatings on the spoke legs. In particular embodiments the durability of the spokes disclosed herein may be improved by adding a heel portion **190, 191** to the proximal ends of the elastomeric joint bodies **112, 114**. While the elastomeric joint bodies **112, 114** are typically formed of an ultra-low hysteresis material, the heel portions **190, 191** may be formed of an elastomeric material having a higher rigidity and improved tear characteristics.

As noted, particular embodiments of the spokes disclosed herein may include two different rubber compositions coating the spoke legs. In such embodiments, the elongated leg reinforcements **146** are covered by a first rubber composition layer **193** on the same side of the leg **140** as the elastomeric joint bodies **112, 114** and by a second rubber composition layer **192** on the opposite side of the leg **140**. These embodiments may be accomplished by laying down a first thin rubber skim of the first rubber composition layer, putting the elongated leg reinforcements on top of this layer and then adding a second thin rubber skim of the second rubber composition layer on top of that.

Other embodiments of spokes may include using different rubber compositions on the same side of the leg **140**. For example, particular embodiments may include coating one or both sides of the leg **140** with a first rubber composition starting from the proximal end of the leg and coating at least 25% of its length, or alternatively at least 50% or at least 75% of its length and then coating the remainder of the length with a second rubber composition. In particular embodiments of the spokes disclosed herein, the side of the leg with the elastomeric joint bodies may be coated with a rubber composition having better tear properties near the for a portion of its length from the proximal end and then a second rubber composition with lower hysteresis properties for the remainder of its length. Those skilled in the art can imagine different arrangements of rubber compositions having differing properties coating different sections of the legs and such embodiments are not excluded by the particular embodiments disclosed above.

Alternative embodiments of the invention are also possible and anticipated. For example, FIG. **10** shows a section view of an alternative embodiment wherein the nose reinforcement membrane is not present. Instead, the portion of elastomeric joint body **136** of the nose **130** farthest from the feet **112, 114** is allowed to stretch apart in the radial direction when the spoke is under compression, much like the portion of the elastomeric joint bodies **112, 114** farthest from the nose portion **130** of the spoke **100**. Thus in this embodiment, the radially inner end of the radially outer support element **144** and the radially outer end of the radially inner support element **142** are "free." In this particular embodiment, additional reinforcement **172** is placed in the elastomeric joint body **136** of the nose portion **130**. This additional reinforcement inhibits movement of the elastomeric joint body in the circumferential direction that otherwise would occur due to the Poisson effect of compression and tension of the elastomeric joint body **136**. In this particular embodiment, elongated reinforcements **172** are oriented in the circumferential direction generally bisecting the elastomeric joint body **136** in to two portions; a radially outer portion and a radially inner portion.

FIG. **11** shows a partial lateral section view of the alternative exemplary embodiment of a spoke **100** that can be attached to an outer tread band **200** and hub **12** and form a part of a tire 10.

When the spoke **100** is deformed radially inward, undergoing compression between the radially outer foot **114** and radially inner foot **112**, the elastomeric joint body **136** of the nose **130** undergoes compression in the radial direction between the radially inner leg **142** and radially outer leg **144** of the spoke along the portion closest to the feet **112, 114** of the spoke **100** and undergoes tension in the radial direction on the portion of the elastomeric joint body farthest from the feet **112, 114**. The radially outer elastomeric joint body **114** of the radially outer foot **114** undergoes compression along the portion closest to the nose **130** and undergoes tension on the portion of the elastomeric joint body 114 most distal from the nose portion **130**.

Similarly at the radially inner foot **112,** when the spoke **100** is deformed radially inward, the elastomeric joint body **112** of the radially inner foot **112** undergoes compression along the portion closest to the nose 130 and undergoes tension on the distal portion of the elastomeric joint body **112**.

The dashed lines in FIG. **11** show the spoke **100'** undergoing compression between the radially outer foot **114'** and the radially inner foot 112'. The compressed spoke **100'** is shown positioned with the hub mating surface **122, 122'** fixed in position while the radially outer foot **114, 114'** is displaced radially inward. As such, it may be observed that the radially inner portion 146, 146' of the radially inner leg **142, 142'** is displaced radially outward when the spoke is compressed such that the radially inner portion **146'** of the radially inner leg **142'** moves radially outward relative to the radially inner surface **122'** of the radially inner foot **112'.** Likewise, a similar displacement occurs at the radially outer foot **114, 114'** with the radially outer portion **148, 148'** of the radially outer leg **144, 144'** is displaced radially inward when the spoke is compressed such that the radially outer portion **148'** of the radially outer leg **144'** moves radially inward relative to the radially outer surface **124'** of the radially outer foot **114'**. The construction of the spoke permitting displacement of the radially outer portion **148, 148'** of the radially outer leg **144, 144'** and radially inner portion **146, 146'** of the radially inner leg **142, 142'** is referred herein as having a "free" spoke end. As shown in this alternative embodiment, the radially inner portion of the radially outer support structure **144** and the radially outer portion of the radially inner support structure **142** may be referred herein as having "free" spoke ends.

The nose portion **130** of the present embodiment possesses a reinforcement **172** which constrains the elastomeric body **136** in the circumferential direction. The elastomeric joint body **136** undergoes compression along the portion closest to the feet **112, 114** when the spoke **100** is compressed. The Poisson effect causes bulging of the elastomeric material when it is under compression, which is restrained here by the reinforcement **172.**

FIG. **12** shows the same embodiment when in tension such that the radially outer foot **114, 114"** is displaced away from the radially inner foot **112, 112"**. The spoke **100** shown generally unloaded in solid lines and also the spoke 100' is shown in tension by the dashed lines. Note how the portions of the feet **112, 112", 114, 114"** which underwent compression when the spoke was in compression are undergoing tension when the spoke is undergoing tension as shown in the present figure. Likewise the portions of the elastomeric joint bodies of the feet **112, 112", 114, 114"** which underwent tension when the spoke was in compression are undergoing compression when the spoke is undergoing tension as shown in the present figure. The elastomeric joint body **136, 136"** of the nose portion **130, 130"** undergoes tension in the portion closest to the feet **112, 112", 114, 114"** of the spoke **100, 100"** and the portions of the elastomeric joint body 136, 136" of the nose portion **130, 130"** undergoes compression in the portion farthest from the feet 112, **112", 114, 114"** of the spoke **100, 100".**

FIG. **13** shows a perspective cutaway view of the spoke embodiment. Portions of the elongated leg reinforcements **146** of the legs **140** are shown. The reinforcement **172** of the elastomeric joint body **136** is shown as a plurality of reinforcements **174** oriented in the circumferential direction. The support element **140** reinforcements **146** are shown as elongated reinforcements oriented generally in the radial direction along the length of the support elements **140**. The reinforcements **146, 174** of the present embodiment are pultruded glass resin composite.

FIG. **14** shows a section view of an alternative embodiment wherein neither the nose reinforcement membrane, nor the elastomeric joint body reinforcement is present. Here, like the previous embodiment, the portion of elastomeric joint body **136** of the nose **130** farthest from the feet **112, 114** is allowed to stretch apart in the radial direction when the spoke is under compression, much like the portion of the elastomeric joint bodies **112, 114** farthest from the nose portion **130** of the spoke **100.** Thus in this embodiment, the radially inner end of the radially outer support element **144** and the radially outer end of the radially inner support element **142** are "free." In this particular embodiment the elastomeric joint body **136** of the nose portion **130** is free of any elongated reinforcements.

FIG. **15** shows a perspective cutaway view of the spoke embodiment. Portions of the elongated leg reinforcements **146** of the leg **140** are shown. The support element **140** reinforcements **146** are shown as elongated reinforcements oriented generally in the radial direction along the length of the support elements **140**. The reinforcements **146** of the present embodiment are pultruded glass resin composite.

<u>Spoke Elastomeric Materials.</u> As noted above, embodiments of the spokes that are disclosed herein include a rubber coating on the spoke legs and elastomeric joint bodies that connect the proximal ends of the spoke to the hub (the hub joint body) and band (the band joint body) respectively and an elastomeric joint body at the nose section (nose joint body) of the spoke that connects the distal ends of the spoke legs. In particular embodiments, the hub and band joint bodies may include a heel portion located at their proximal ends. To maintain a lower hysteresis in the hub and band joint bodies, particular embodiments that include a heel portion in the joint bodies may provide that no more than 30 vol% of the joint body be the heel portion or alternatively, no more than 25 vol% or no more than 20 vol%. As a lower boundary of the heel volume, particular embodiments that include a heel portion may include at least 5 vol% or at least 10 vol% as the heel portion of the joint body. The percent volume is of the total volume of the joint body, *i.e.,* total volume being the heel and the non-heel portions of the joint body.

In particular embodiments, the heel portion is found to provide improved durability of the proximal ends of the spoke assembly. In such embodiments, the heel portion is of a different rubber composition than the remainder of the elastomeric joint body. The heel, if present, may form a portion of the hub joint body, the band joint body or both.

The rubber compositions useful for the spokes disclosed herein differ based upon their service. For the rubber coating of the legs, particular embodiments include a rubber composition that may be characterized as having a higher rigidity than the hub, band and nose joint bodies and also having ultra-low hysteresis properties to provide the non-pneumatic tire with low rolling resistance. The higher rigidity is found to be useful in some embodiments because it provides improved lateral stiffness for the non-pneumatic tire. Particular embodiments of the rubber compositions suitable for the rubber coating of the spoke legs therefore possess at least one or more of the following set of physical properties: a modulus of elongation at 10% elongation (MA10) as measured in accordance with ASTM D412 of between 2.0 MPa and 5.0 MPa or alternatively between 2.5 MPa and 3.5 MPa or alternatively between 2.5 MPa and 3.0 MPa; an ultra-low hysteresis as determined by the tan delta measured at 23° C and at 50 % strain of between 0.015 and 0.035 or alternatively between 0.019 and 0.029; and a complex shear modulus G* measured at 23° C and at 50 % strain of at least 0.8 MPa or alternatively between 0.8 MPa and 1.2 MPa or between 0.9 MPa and 1.1 MPa.

The joint bodies also have an effect on the rolling resistance of the tire so for particular embodiments it is suitable to use rubber compositions that have ultra-low hysteresis, but it is also important that they possess good tear resistance. Particular embodiments of the rubber compositions suitable for the joint bodies therefore possess at least one or more of the following set of physical properties: a modulus of elongation at 10% elongation (MA10) as measured in accordance with ASTM D412 of between 2.0 MPa and 5.0 MPa or alternatively between 3.0 MPa and 4.0 MPa; an ultra-low hysteresis as determined by the tan delta measured at 23° C and at 50 % strain of between 0.015 and 0.035 or alternatively between 0.019 and 0.029; a complex shear modulus G* measured at 23° C and at 50 % strain of at least 1.0 MPa or alternatively between 1.0 MPa and 1.3 MPa or between 1.1 MPa and 1.2 MPa; and a tear resistance property of measured on a notched test piece at 23 °C of a stress at break of between 15 MPa and 30 MPa or alternatively between 20 MPa and 25 MPa and a strain at break of between 85% and 120% or alternatively between 95% and 110%.

For those embodiments that include joint bodies having a heel, the heel portion is typically formed from a rubber composition that may be characterized as having better tear properties and is much more rigid. Particular embodiments of the rubber compositions suitable for the heel portion therefore possess at least one or more of the following set of physical properties: a modulus of elongation at 10% elongation (MA10) as measured in accordance with ASTM D412 of between 4.0 MPa and 15.0 MPa or alternatively between 5.0 MPa and 12.0 MPa or 6 MPa and 10 MPa; a complex shear modulus G* measured at 23° C and at 50 % strain of between 1.2 MPa and 2.2 MPa or alternatively between 1.5 MPa and 2.0 MPa; and a tear resistance property of measured on a notched test piece at 23 °C of a stress at break of between 50 MPa and 95 MPa or alternatively between 60 MPa and 90 MPa and a strain at break of between 100% and 250% or alternatively between 125% and 200%.

Each of the rubber compositions useful in the spoke embodiments disclosed herein include one or more highly unsaturated diene rubbers, which are diene elastomers that are resulting at least in part from conjugated diene monomers and having a content of such monomers that is greater than 50 mol%. Natural rubber is a highly unsaturated diene elastomer.

Suitable highly unsaturated diene rubbers may include, for example, polybutadienes (BR), polyisoprenes (IR), natural rubber (NR), butadiene copolymers, isoprene copolymers and mixtures of these elastomers. Such copolymers include butadiene/styrene copolymers (SBR), isoprene/butadiene copolymers (BIR), isoprene/styrene copolymers (SIR) and isoprene/butadiene/styrene copolymers (SBIR). Suitable elastomers may also include any of these elastomers being functionalized elastomers, such functionalized elastomers being well-known in the art.

For those rubber compositions that are useful as ultra-low hysteresis rubber compositions, namely those for use in the nose joint body, the hub joint body and the band joint body, and for those that are useful for the coating on the spoke legs, particularly useful rubber components include, for example, natural rubber (NR), polybutadiene rubber (BR) and copolymers of polybutadiene rubber and styrene (SBR).

For particular embodiments of the joint body rubber compositions, the SBR copolymers are limited to having no more than 5 mol% bound styrene since higher amounts may provide undesired increases in the hysteresis of the rubber composition. However, when the SBR is functionalized with a moiety that can interact with a silica reinforcing filler, then the bound styrene content may be higher such as, for example, between 1 mol% and 35 mol% or alternatively between 1 mol% and 30 mol% or between 1 mol% and 20 mol% bound styrene content. In particular embodiments, higher bound styrene content, *i.e.,* above 30 mol%, is not useful. Functionalized rubbers, *i.e.,* those appended with active moieties, are well known in the industry and such rubbers may be functionalized by attaching these active moieties to the polymer backbone, along the branches of the polymer or at the branch ends of the polymer. Suitable functionalizing moieties that interact with a silica filling include, for example, silanol groups, polysiloxane groups, alkoxysilane groups and amino groups.

Particular embodiments of the joint body rubber compositions disclosed herein may include between 50 phr and 100 phr of natural rubber or alternatively between 60 phr and 100 phr, between 75 phr and 100 phr or between 85 phr and 100 phr of natural rubber. Particular embodiments may be limited to 100 phr of natural rubber. Use of less than these amounts of natural rubber may result in not achieving the target tear properties of the cured rubber composition.

In addition to the natural rubber. such rubber compositions may include between 0 phr and 50 phr of a second rubber component or alternatively between 0 phr to 40 phr, between 0 phr and 25 phr or between 0 phr and 15 phr of the second rubber component. The second rubber component may be selected from the group of polybutadiene rubber or a styrene-butadiene copolymer with a bound styrene content of no more than 5 mol% or alternatively no more than 3 mol% or combinations of the rubber components. Particular embodiments may be limited to 0 phr of the second rubber component or alternatively to 0 phr of the SBR copolymer. The inclusion of only these rubber components can help ensure that the ultra-low hysteresis targets may be reached for the disclosed rubber compositions. Particular embodiments of the rubber compositions for the joint bodies include no other rubber components other than the functionalized SBR as disclosed below.

As has been noted above, when the SBR is functionalized with a moiety that interacts with a silica reinforcing filler, the embodiments of the rubber compositions disclosed herein that are reinforced at least in part with a silica filler may further include between 0 phr and 20 phr of the functionalized SBR component or alternatively between 0 phr and 15 phr or between 0 phr and 10 phr of the functionalized SBR. In particular embodiments, the amount of such functionalized SBR is limited to 0 phr.

Particular embodiments of the rubber compositions useful for the coating on the spoke legs disclosed herein may include between 50 phr and 100 phr of natural rubber or alternatively between 50 phr and 95 phr, between 50 phr and 90 phr or between 60 phr and 80 phr of natural rubber. Particular embodiments may be limited to 100 phr of natural rubber.

In addition to the natural rubber, such rubber compositions may include between 0 phr and 50 phr of a second rubber component selected from the group polybutadiene rubber or a styrene-butadiene copolymer with a bound styrene content of no more than 5 mol% or alternatively no more than 3 mol%. Alternatively, the amount of such second rubber component may be between 5 phr and 50 phr, between 10 phr and 50 phr or between 20 phr and 40 phr. Particular embodiments of the rubber compositions for the rubber coating of the spoke legs include no other rubber components other than the functionalized SBR as disclosed above and in the same limited quantities as were disclosed as being useful for the joint body rubber compositions.

Particular embodiments of the rubber compositions useful for the heel portion of the joint bodies disclosed herein may include between 90 phr and 100 phr of natural rubber or alternatively between 95 phr and 100 phr of natural rubber. Particular embodiments may be limited to 100 phr of natural rubber. The high amounts of natural rubber help ensure that the tear property target is achieved and provide particular embodiments of the non-pneumatic tire with increased robustness.

In addition to the natural rubber, such rubber compositions may include between 0 phr and 10 phr of a second highly unsaturated diene elastomer or alternatively between 0 phr and 5 phr. Such useful rubber components include, for example, any of those highly unsaturated diene elastomers disclosed above.

In addition to the rubber components disclosed above, each of the rubber compositions further include a reinforcing filler. Reinforcing fillers are added to rubber compositions typically to improve, *inter alia,* their tensile strength and their rigidity. Reinforcing fillers that are very well known in the industry include, for example, carbon black and silica.

For those rubber compositions that are useful as ultra-low hysteresis rubber compositions, namely those for use in the nose joint body, the hub joint body and the band joint body, particular embodiments are reinforced with a silica filler with only a small amount of carbon black included if desired to color the rubber composition black.

Silica may take many useful forms including, for example, as powder, microbeads, granules, balls and/or any other suitable form as well as mixtures thereof. Such silicas may be fumed, precipitated and/or highly dispersible silica (known as "HD" silica).

Useful silicas are those that have a surface area of between 19 $m^2$/g and 55 $m^2$/g or alternatively, between 29 $m^2$/g and 55 $m^2$/g or between 30 $m^2$/g and 45 $m^2$/g. Examples of useful silicas may include, for example Silene 732D (powder form, surface area 35 m$^2$/g) available from PPG, Ultrasil 880 (powder form, 35 m$^2$/g), which is available from Evonik, and EXP7031-1 (powder form, 42 m$^2$/g) which is also available from Evonik. The surface area for silica fillers is determined in accordance with ASTM D1993. These useful silicas are typically in powder form.

To obtain the desired physical properties of the rubber compositions for the joint bodies, the loadings of the reinforcing fillers are low. If the loadings become too high, then the ultra-low hysteresis targets cannot be achieved and if the loadings are too low, then the targets for increased rigidity and improved tear properties are not met.

Therefore, particular embodiments of the rubber compositions useful for the joint bodies may include between 15 phr and 40 phr of silica or alternatively between 20 phr and 40 phr or between 25 phr and 35 phr of silica. If carbon black is added to the rubber compositions, then the amount of carbon black is limited to between 0 phr and 6 phr or alternatively to between 1 phr and 6 phr or between 1 phr and 5 phr of carbon black. Particular embodiments may limit the carbon black to one or more of those having a surface area of between 19 m$^2$/g and 39 m$^2$/g or alternatively between 25 m$^2$/g and 39 m$^2$/g or between 32 m$^2$/g and 39 m$^2$/g as measured in accordance with ASTM D6556.

In accordance with ASTM D1765 Standard Classification of Carbon Blacks, those carbon blacks having a surface area of between 25 m$^2$/g and 32 m$^2$/g are classified as Group No. 7 and those carbon blacks having a surface area of between 70 m$^2$/g and 100 m$^2$/g are classified as Group No. 3 and those carbon blacks having a surface area of between 33 m$^2$/g to 39 m$^2$/g are classified as Group No. 6. Examples of such Group No. 6 carbon blacks include N630, N650, N660, N683 and examples of such Group No. 7 carbon blacks include N754, N762, N765, N772 and N787 and examples of such Group No. 3 carbon blacks include N326, N347, N375, N330, and N351. An example of a carbon black having a surface area of 19 m$^2$/g that is available on the market is S204, available from Orion Engineered Carbon with offices in Kingwood, Texas. This carbon black has a nitrogen surface area of 19 m$^2$/g, an OAN (ASTM D2414) of 138 ml/100 g, a COAN (ASTM D3493-09) of 76 ml/ 100 g and an iodine number (ASTM D1510) of 19.6 mg/g.

For those rubber compositions that are useful for the rubber coating of the spoke legs, particular embodiments are reinforced with a mixture of carbon black and silica. Useful carbon blacks and silicas include those disclosed above. For those carbon blacks having a surface area of less than 25 m$^2$/g, particular embodiments limit such carbon blacks to those further having a OAN as determined by ASTM D2414 of between 100 ml/100 g and 150 ml/100 g or alternatively, between 110 ml/100 g and 150 ml/100 g. The oil adsorption number (OAN) is a measure of the carbon blacks structure, a higher structure carbon black being those with aggregates that are joined into more chain-like clusters, having a narrow core with more branching.

It should be noted that since the rigidity and cohesiveness of the rubber compositions disclosed herein are relatively low, particular embodiments of the rubber compositions useful for the joint bodies and/or the rubber coatings on the legs may include no plasticizers, including oils and/or resins. Particular embodiments of the heel portion of the joint bodies may include a plasticizer such as an oil and/or a plasticizing resin.

For those rubber compositions that are useful for the heel portion of the hub joint body and the band joint body, particular embodiments of such rubber compositions include carbon black, silica or combinations thereof. In particular embodiments, the total amount of filler may be between 61 phr and 80 phr or alternatively between 65 phr and 80 phr of filler. Particularly useful carbon blacks are those having a surface area (ASTM D6556) of between 70 m$^2$/g and 120 m$^2$/g or alternatively between 70 m$^2$/g and 100 m$^2$/g. Useful silicas include, for example, Zeosil 125 GR having a CTAB of 115 m$^2$/g and a BET of 125 m$^2$/g; Zeosil 1115 MP having a CTAB of 110 m$^2$/g and a BET of 115 m$^2$/g; and Zeosil 1165 MP having a CTAB of 155 m$^2$/g and a BET of 160 m$^2$/g. These silica examples are all available from Rhodia.

In accordance with ASTM D1765 Standard Classification of Carbon Blacks, those carbon blacks having a surface area of between 70 m$^2$/g and 99 m$^2$/g are classified as Group No. 3 and those carbon blacks having a surface area of between 100 m$^2$/g to 120 m$^2$/g are classified as Group No. 2. Examples of such Group No. 3 carbon blacks include N326, N347, N335 and examples of such Group No. 2 carbon blacks include N220, N224, and N231.

For those embodiments that include silica as a reinforcing filler, a silica coupling agent may be included. Such coupling agents are well known and are at least bifunctional to provide a sufficient chemical and/or physical connection between the inorganic reinforcing filler and the diene elastomer. Examples of such coupling agents include bifunctional organosilanes or polyorganosiloxanes. Particular well-known examples of coupling agents include 3,3'-bis(triethoxysilylpropyl)disulfide (TESPD) and 3,3'-bis(triethoxysilylpropyl)tetrasulfide (TESPT).

In addition to the rubber components and the reinforcing fillers discussed above, the rubber compositions disclosed herein may further include a curing system. Particular embodiments are cured with a sulfur curing system that includes free sulfur and may further include, for example, one or more of accelerators, stearic acid and zinc oxide. Suitable free sulfur includes, for example, pulverized sulfur, rubber maker's sulfur, commercial sulfur, and insoluble sulfur. The amount of free sulfur included in the rubber composition is not limited and may range, for example, between 0.5 phr and 10 phr or alternatively between 0.5 phr and 5 phr or between 0.5 phr and 3 phr. Particular embodiments may include no free sulfur added in the curing system but instead include sulfur donors.

Accelerators are used to control the time and/or temperature required for vulcanization and to improve the properties of the cured rubber composition. Particular embodiments of the present invention include one or more accelerators. One example of a suitable primary accelerator useful in the present invention is a sulfenamide. Examples of suitable sulfenamide accelerators include n-cyclohexyl -2-benzothiazole sulfenamide (CBS), N-tert-butyl-2-benzothiazole Sulfenamide (TBBS), N-Oxydiethyl-2-benzthiazolsulfenamid (MBS) and N'-dicyclohexyl-2-benzothiazolesulfenamide (DCBS). Combinations of accelerators are often useful to improve the properties of the cured rubber composition and the particular embodiments include the addition of secondary accelerators.

Other additives can be added to the rubber compositions disclosed herein as known in the art. Such additives may include, for example, some or all of the following: antidegradants, antioxidants, fatty acids, waxes, stearic acid and zinc oxide. Examples of antidegradants and antioxidants include 6PPD, 77PD, IPPD and TMQ and may be added to rubber compositions in an amount, for example, of from 0.5 phr and 5 phr. Zinc oxide may be added in an amount, for example, of between 1 phr and 6 phr or alternatively, of between 1.5 phr and 4 phr. Waxes may be added in an amount, for example, of between 1 phr and 5 phr.

The rubber compositions that are embodiments of the present invention may be produced in suitable mixers, in a manner known to those having ordinary skill in the art, typically using two successive preparation phases, a first phase of thermo-mechanical working at high temperature, followed by a second phase of mechanical working at lower temperature.

The first phase of thermo-mechanical working (sometimes referred to as "nonproductive" phase) is intended to mix thoroughly, by kneading, the various ingredients of the composition, with the exception of the vulcanization system. It is carried out in a suitable kneading device, such as an internal mixer or an extruder, until, under the action of the mechanical working and the high shearing imposed on the mixture, a maximum temperature generally between 120° C and 190° C, more narrowly between 130° C and 170° C, is reached.

After cooling of the mixture, a second phase of mechanical working is implemented at a lower temperature. Sometimes referred to as "productive" phase, this finishing phase consists of incorporating by mixing the vulcanization (or cross-linking) system (sulfur or other vulcanizing agent and accelerator(s)), in a suitable device, for example an open mill. It is performed for an appropriate time (typically between 1 and 30 minutes, for example between 2 and 10 minutes) and at a sufficiently low temperature lower than the vulcanization temperature of the mixture, so as to protect against premature vulcanization.

It should be noted that the rubber compositions described herein for the different uses, e.g., elastomeric joint bodies, heels and rubber coatings, are described as having ranges of components used in the rubber compositions and ranges in the desired properties of the cured rubber compositions. As those skilled in the art will recognize, the rubber compositions for each use may be the same or different. For example, each of the nose joint bodies may be formed from exactly the same rubber composition or from different ones so long as they are all formed from the ranges of materials as described and or claimed herein. Likewise as a further example, each of the rubber coatings may be formed from exactly the same rubber compositions or from different ones so long as they are all formed from the ranges of materials as described and or claimed herein.

_Molds for Spokes._ FIG. **16** shows an exploded perspective view of a particular embodiment of a mold 400, 410, 420, 430, 440, 450, 460 used to manufacture one example of an individual spoke 100. The spoke components are shown separated as they are placed into the mold. Some of the spoke components show the orientation of the reinforcement fibers and cords. For example, the nose reinforcement membrane **132** reinforcements **134** are shown in the partial cutaway view of that component. The reinforcements are shown in this embodiment to run parallel to one another and along the width of the reinforcement membrane **132**. Both of the legs **140, 142, 144** are shown and the radially inner leg **142** is shown with a partial cut-away showing the composite glass resin reinforcements **146** positioned parallel to one another and along the width of the radially inner leg **140**. While the reinforcements **146** of the legs **140** are resiliently flexible, the fiber reinforcement **134** of the nose reinforcement membrane **132** are flexible enough to be permanently deformed upon molding of the surrounding rubber matrix material.

FIG. **17** shows an exploded perspective view of an alternative mold **400, 410, 420, 430,** 440, **450, 460** used to manufacture an alternative embodiment of individual spoke **100**. The spoke components are shown separated as they are placed into the mold. Some of the spoke components show the orientation of the reinforcement fibers and cords. For example, the elastomeric joint body **136** reinforcements **174** are shown in the partial cutaway view of that component. The reinforcements **174** are shown in this embodiment to run parallel to one another and along the width of the reinforcement membrane **172**. Both of the legs **140, 142, 144** are shown and the radially inner leg **142** is shown with a partial cut-away showing the composite glass resin reinforcements 146 positioned parallel to one another and along the width of the radially inner leg 140. The reinforcements 146 of the legs **140** and the reinforcements **174** of the elastomeric joint body **136** are resiliently flexible. Note that in this particular embodiment, the nose membrane reinforcement **132** is omitted. Alternatively both the nose membrane reinforcement **132** may be included in combination with the elastomeric joint body reinforcement **172.**

Once the various uncured components are laid in place over the mold bottom **410,** the mold **400** is closed and secured. Here the mold is closed with screw fasteners through apertures **470** and secured to threaded portions of the apertures **470** of the mold components. Tightening of the fasteners exert pressure, or/and additional pressure may be applied to the mold top during curing. Heating of the mold 400 heats the rubber components within and cures the rubber, adheres the rubber components together and forms a composite spoke having excellent resilient qualities of sufficient durability for use as a structural element in an automotive non-pneumatic tire. Other uses for the resilient composite structure may include vibration isolation mounts, such as motor mounts, transmission mounts or seat mounts, or used as a resilient hinge to allow movement of one object relative to another object otherwise connected by the resilient composite structure.

The "V-shape" of the embodiments of the spoke shown and described herein allow the adjacent spokes to "nest" and give linear spring rate when deflected radially over a distance approximately equal to the tires vertical deflection. The nesting of the spokes avoid adjacent spokes from clashing under normal loading conditions.

It should be understood by a person of ordinary skill in the art that the stiffness of the spoke may be adjusted by adjusting the length of the "V" of the "Vshaped spoke", the constituent material moduli and the internal architecture of the spoke.

It should be understood that other web element configurations and geometries may be used within the scope of the invention, including web elements which are interconnected such as where they may form a honeycomb or other pattern. While when the resilient composite structure is configured as a spoke they are configured to extend in a lateral direction across the width of the tire, it should be understood that they may be configured at other angles, such as at an angle to the lateral direction of the tire. For example, the spoke may extend at a diagonal between the circumferential direction and the lateral direction of the tire.

The invention is further illustrated by the following examples, which are to be regarded only as illustrations and not delimitative of the invention in any way. The properties of the compositions disclosed in the examples were evaluated as described below and these utilized methods are suitable for measurement of the claimed properties of the claimed invention.

Modulus of elongation (MPa) was measured at 10% (MA10) or 100% (MA100) at a temperature of 23 °C based on ASTM Standard D412 on dumb bell test pieces. The measurements were taken in the second elongation; *i.e.,* after an accommodation cycle. These measurements are secant moduli in MPa, based on the original cross section of the test piece.

The dynamic properties for the rubber compositions were measured at 23° C on a Metravib Model VA400 ViscoAnalyzer Test System in accordance with ASTM D5992-96. The response of a sample of vulcanized material (double shear geometry with each of the two 10 mm diameter cylindrical samples being 2 mm thick) was recorded as it was being subjected to an alternating single sinusoidal shearing stress at a frequency of 10 Hz under a controlled temperature of 23° C. Scanning was effected at an amplitude of deformation of 0.05 to 90 % (outward cycle) and then of 90 % to 0.05% (return cycle). The value of the tangent of the loss angle tan delta was determined during the outward cycle at its maximum value, at 50% strain. The complex shear modulus G* was determined at 50% strain during the outward cycle.

The elongation property was measured as elongation at break (%) and the corresponding elongation stress (MPa), which is measured at 23 °C in accordance with ASTM Standard D412 on ASTM C test pieces.

The tear resistance indices are measured at 23 °C. The breaking load (FRD) is in N/mm of thickness and the elongation at break (ARD) in percentage are measured on a test piece of dimensions 10 x 142 x 2.5 mm notched with 3 notches that each have a depth of 3 mm. The tear resistance index is then provided by the following equation:

$$TR = (FRD * ARD) / 100.$$

Example **1**

Rubber compositions were prepared using the components shown in Table 1. The amount of each component making up the rubber compositions are provided in parts er hundred part of rubber by weight (phr).

The carbon blacks were N650 having a surface area of 35 m$^2$/g (surface areas being STSA in accordance with ASTM D-6556), N326 having a surface area of 76 m$^2$/g and N347 having a surface area of 83 m$^2$/g. The silica was Silene 732D a powder having a surface area of 35 m$^2$/g from PPG. CTP is N-(cyclohexylthio)phthalimide, a retarder for sulfur-cured elastomers.

The wt% ratio of carbon black to silica for rubber formulation F1 is 53% to 47%. The total phr of silica (17 phr) and carbon black (15 phr) is 32 phr and 17/32 is 53% and 15/32 is 47 providing the ratio of 53% to 47%.

The antioxidant package included 6PPD, TMQ and wax. Formulation F3 included a methylene donor/acceptor reinforcing system, which is well known to those in the art.

The rubber formulations were prepared by mixing the components given in Table **1,** except for the accelerators and sulfur, in a Banbury mixer until a temperature of between 110 °C and 170 °C was reached. The accelerators and sulfur were added in the second phase on a mill. Vulcanization was effected at 150 °C for 15 minutes. The formulations were then tested to measure their properties, the results of which are shown in Table **1.**

As can be seen from Table **2,** both F1 and F2 had very low hysteresis but the F2 formulation for the joint bodies provided a higher resistance to tear. The heel formulations F3 and F4, provided the highest hysteresis but the highest resistance to tear.

Table **1 -** Rubber Formulations

| Formulations | F1 | F2 | F3 | F4 |
|---|---|---|---|---|
| Service | Coating | Joints | Heel | Heel |
| NR | 100 | 100 | 100 | 100 |
| BR | | | | |
| N650 | 4 | 4 | | |
| N326 | | | | 78 |
| N204 | | | 66 | |
| Silica | 30 | 30 | | |
| Si69 | 0.56 | 0.56 | | |
| HMT | | | | 0.8 |
| Resin Hard FP | | | | 4 |
| Paraffinic Oil | | | 3 | 4 |
| DPG | 0.07 | 0.07 | | |
| Antioxidants | 5.7 | 8.1 | 1.5 | 2 |
| CTP | 0.2 | 0.3 | 0.6 | 1.2 |
| Zinc Oxide | 3 | 3 | 5 | 5 |
| Stearic Acid | 0.5 | 0.5 | 0.7 | 0.7 |
| Sulfur Cure Package | 9.1 | 7.1 | 8.6 | 9.2 |

Table **2** - Physical Properties

| Formulations | F1 | F2 | F3 | F4 |
|---|---|---|---|---|
| **Phys. Properties** | | | | |
| MA10, MPa | 2.7 | 3.2 | 5.7 | 7.3 |
| MA100, MPa | 1.7 | 1.9 | 4.4 | 3.3 |
| TanD (50%, 23° C) | 0.022 | 0.022 | 0.059 | 0.150 |
| G*50%, MPa | 1.00 | 1.20 | 1.70 | 1.80 |
| Strain at Break, % | 480 | 450 | 275 | 330 |
| Tear Stress @ 23 °C , MPa | 20 | 20 | 60 | 80 |
| Tear Strain at break @ 23 °C, % | 125 | 100 | 110 | 185 |
| Tear Index | 20 | 20 | 66 | 150 |

The terms "comprising," "including," and "having," as used in the claims and specification herein, shall be considered as indicating an open group that may include other elements not specified. The term "consisting essentially of," as used in the claims and specification herein, shall be considered as indicating a partially open group that may include other elements not specified, so long as those other elements do not materially alter the basic and novel characteristics of the claimed invention. The terms "a," "an," and the singular forms of words shall be taken to include the plural form of the same words, such that the terms mean that one or more of something is provided. The terms "at least one" and "one or more" are used interchangeably. The term "one" or "single" shall be used to indicate that one and only one of something is intended. Similarly, other specific integer values, such as "two," are used when a specific number of things is intended. The terms "preferably," "preferred," "prefer," "optionally," "may," and similar terms are used to indicate that an item, condition or step being referred to is an optional (not required) feature of the invention. Ranges that are described as being "between a and b" are inclusive of the values for "a" and "b".

**EP 4 440 848 B1**

The foregoing description is provided for the purpose of illustration only and should not be construed in a limiting sense. Only the language of the following claims should limit the scope of this invention.

**Claims**

1. A non-pneumatic wheel, comprising a hub, an outer tread band and a plurality of spokes connecting the hub with the outer tread band, wherein each spoke of the plurality of spokes comprises:

    a first support element extending from the hub and a second support element extending from the tread band that are positioned to form an interior angle, which is an angle of greater than 0 degrees but less than 180 degrees, between a first side of the first support element and a first side of the second support element, wherein the first and second support elements comprise a coating of a first rubber composition;
    a first elastomeric joint body formed of a second rubber composition and positioned within the interior angle and connecting the distal ends, the distal ends being those that are opposite from the hub and the tread band ends respectively, of the first and second support elements;
    a second elastomeric joint body comprising a third rubber composition and connecting a second side of the first support element at its proximal end to the hub;
    a third elastomeric joint body comprising a fourth rubber composition and connecting a second side of the second support element at its proximal end to the band, and wherein the first, second, third, and fourth rubber compositions are based on cross-linkable rubber compositions, the first, second, third and fourth rubber composition comprising, in parts by weight per 100 parts by weight of rubber:

        between 50 phr and 100 phr of natural rubber;
        between 0 phr and 50 phr of a second rubber component selected from the group consisting of polybutadiene rubber, a copolymer of polybutadiene and styrene wherein the copolymer has no more than 5 mol% styrene and combinations thereof;
        between 15 phr and 40 phr of a reinforcing filler that comprises between 2 phr and 6 phr of a carbon black and between 20 phr and 40 phr of a silica, wherein the silica has a surface area of between 19 m$^2$/g and 55 m$^2$/g; and
        one or more cure systems for the first, second, third and fourth rubber compositions, which cure systems may be the same or different; at least one of the second and third elastomeric joint bodies further comprise a heel at the proximal end of the elastomeric joint bodies, wherein the heel is formed of a fifth rubber composition, wherein the heel is no more than 25% of the total volume of the at least one of the second and third elastomeric joint bodies, and wherein the fifth rubber composition that forms the heel is based on cross-linkable rubber compositions which may be the same or different for each heel, the fifth rubber composition comprising, in parts by weight per 100 parts by weight of rubber:

        between 90 phr and 100 phr of natural rubber;
        up to 10 phr of a third rubber component selected from the group consisting of polybutadiene rubber, a copolymer of polybutadiene and styrene wherein the copolymer has no more than 5 mol% styrene and combinations thereof;
        between 61 phr and 80 phr of a second carbon black; and
        a cure system for the fifth rubber compositions.

2. The non-pneumatic wheel of claim 1, further comprising a reinforcement membrane connecting the second side of the first support element and the second side of the second support element at their distal ends.

3. The non-pneumatic wheel of any of the preceding claims, wherein the first support element and the second support element each further comprise one or more reinforcements coated with the first rubber composition.

4. The non-pneumatic wheel of claim 3, wherein the one or more reinforcements for each of the first and second support elements are cords of fiber reinforced plastic oriented between the distal and proximal ends of each of the first and second support elements.

5. The non-pneumatic wheel of any of the preceding claims, wherein the first rubber composition includes 100 phr of natural rubber.

**6.** The non-pneumatic wheel of any of the preceding claims, wherein the silica has a surface area of between 30 m$^2$/g and 55 m$^2$/g.

**7.** The non-pneumatic wheel of any of the preceding claims, wherein one or more of the second, third and fourth rubber compositions includes 100 phr of natural rubber.

**8.** The non-pneumatic wheel of any of the preceding claims, wherein one or more of the second, third and fourth rubber compositions includes between 25 phr and 35 phr of the silica.

**9.** The non-pneumatic wheel of any of the preceding claims, wherein the fifth rubber composition includes 100 phr of natural rubber.

**10.** The non-pneumatic wheel of any of the preceding claims, wherein the fifth rubber composition reinforcing filler is carbon black.

**Patentansprüche**

**1.** Nichtpneumatisches Rad, das eine Nabe, ein äußeres Lauffächenband und mehrere Speichen, die die Nabe mit dem äußeren Lauffächenband verbinden, umfasst, wobei jede Speiche der mehreren Speichen Folgendes umfasst:
ein erstes Stützelement, das sich von der Nabe erstreckt, und ein zweites Stützelement, das sich von dem Lauffächenband erstreckt, die so positioniert sind, dass sie einen Innenwinkel, der ein Winkel größer 0 Grad aber kleiner 180 Grad ist, zwischen einer ersten Seite des ersten Stützelements und einer ersten Seite des zweiten Stützelements bilden, wobei das erste und das zweite Stützelement eine Beschichtung aus einer ersten Gummizusammensetzung umfassen:

einen ersten Elastomer-Gelenkkörper, der aus einer zweiten Gummizusammensetzung gebildet und innerhalb des Innenwinkels positioniert ist und die distalen Enden, wobei die distalen Enden jene sind, die dem Nabenbeziehungsweise dem Lauffächenbandende gegenüberliegen, des ersten und des zweiten Stützelements verbindet;
einen zweiten Elastomer-Gelenkkörper, der eine dritte Gummizusammensetzung umfasst und eine zweite Seite des ersten Stützelements an seinem proximalen Ende mit der Nabe verbindet;
einen dritten Elastomer-Gelenkkörper, der eine vierte Gummizusammensetzung umfasst und eine zweite Seite des zweiten Stützelements an seinem proximalen Ende mit dem Band verbindet, und wobei die erste, zweite, dritte und vierte Gummizusammensetzung auf quervernetzbaren Gummizusammensetzungen basieren, wobei die erste, zweite, dritte und vierte Gummizusammensetzung pro 100 Gewichtsanteilen an Gummi Folgendes nach Gewichtsanteilen umfassen:

zwischen 50 phr und 100 phr Naturkautschuk;
zwischen 0 phr und 50 phr einer zweiten Gummikomponente, die aus der Gruppe ausgewählt ist, die aus Polybutadien-Gummi, einem Copolymer von Polybutadien und Styrol, wobei das Copolymer nicht mehr als 5 Mol% Styrol aufweist, und Kombinationen davon besteht;
zwischen 15 phr und 40 phr eines verstärkenden Füllstoffs, der zwischen 2 phr und 6 phr eines Rußes und zwischen 20 phr und 40 phr einer Kieselerde umfasst, wobei die Kieselerde eine Oberfläche zwischen 19 m$^2$/g und 55 m$^2$/g aufweist; und
ein oder mehrere Aushärtungssysteme für die erste, zweite, dritte und vierte Gummizusammensetzung, wobei die Aushärtungssysteme dieselben oder unterschiedliche sein können; mindestens einer des zweiten und des dritten Elastomer-Gelenkkörpers weiter eine Ferse am proximalen Ende der Elastomer-Gelenkkörper umfasst, wobei die Ferse aus einer fünften Gummizusammensetzung gebildet ist, wobei die Ferse nicht mehr als 25% des Gesamtvolumens des mindestens einen des zweiten und des dritten Elastomer-Gelenkkörpers ausmacht, und wobei die fünfte Gummizusammensetzung, die die Ferse bildet, auf quervernetzbaren Gummizusammensetzungen basiert, die für jede Ferse dieselbe oder unterschiedliche sein können, wobei die fünfte Gummizusammensetzung pro 100 Gewichtsteile des Gummis Folgendes nach Gewichtsteilen umfasst:

zwischen 90 phr und 100 phr Naturkautschuk;
bis zu 10 phr einer dritten Gummikomponente, ausgewählt aus der Gruppe die aus Polybutadien-Gummi, einem Copolymer von Polybutadien und Styrol, wobei das Copolymer nicht mehr als 5 Mol% Styrol aufweist, und Kombinationen davon besteht;
zwischen 61 phr und 80 phr eines zweiten Rußes; und
ein Aushärtungssystem für die fünften Gummizusammensetzungen.

2. Nichtpneumatisches Rad nach Anspruch 1, das weiter eine Verstärkungsmembran umfasst, die die zweite Seite des ersten Stützelements und die zweite Seite des zweiten Stützelements an deren distalen Enden verbindet.

3. Nichtpneumatisches Rad nach einem der vorstehenden Ansprüche, wobei das erste Stützelement und das zweite Stützelement jeweils weiter eine oder mehrere Verstärkungen umfassen, die mit der ersten Gummizusammensetzung beschichtet sind.

4. Nichtpneumatisches Rad nach Anspruch 3, wobei die eine oder mehreren Verstärkungen für jedes des ersten und des zweiten Stützelements faserverstärke Kunststoffstränge sind, die zwischen den distalen und proximalen Enden jedes des ersten und des zweiten Stützelements ausgerichtet sind.

5. Nichtpneumatisches Rad nach einem der vorstehenden Ansprüche, wobei die erste Gummizusammensetzung 100 phr Naturkautschuk beinhaltet.

6. Nichtpneumatisches Rad nach einem der vorstehenden Ansprüche, wobei die Kieselerde eine Oberfläche zwischen 30 $m^2$/g und 55 $m^2$/g aufweist.

7. Nichtpneumatisches Rad nach einem der vorstehenden Ansprüche, wobei eine oder mehrere der zweiten, dritten und vierten Gummizusammensetzung 100 phr Naturkautschuk beinhaltet.

8. Nichtpneumatisches Rad nach einem der vorstehenden Ansprüche, wobei eine oder mehrere der zweiten, dritten und vierten Gummizusammensetzung zwischen 25 phr und 35 phr der Kieselerde beinhaltet.

9. Nichtpneumatisches Rad nach einem der vorstehenden Ansprüche, wobei die fünfte Gummizusammensetzung 100 phr Naturkautschuk beinhaltet.

10. Nichtpneumatisches Rad nach einem der vorstehenden Ansprüche, wobei der verstärkende Füllstoff der fünften Gummizusammensetzung Ruß ist.

**Revendications**

1. Roue non pneumatique, comprenant un moyeu, une bande de roulement extérieure et une pluralité de rayons reliant le moyeu à la bande de roulement extérieure, dans laquelle chaque rayon de la pluralité de rayons comprend :

un premier élément de support s'étendant à partir du moyeu et un deuxième élément de support s'étendant à partir de la bande de roulement, lesquels sont positionnés de manière à former un angle intérieur consistant en un angle supérieur à 0 degrés mais inférieur à 180 degrés, entre un premier côté du premier élément de support et un premier côté du deuxième élément de support, dans laquelle les premier et deuxième éléments de support comprennent un revêtement d'une première composition de caoutchouc ;
un premier corps de joint élastomère constitué d'une deuxième composition de caoutchouc et positionné dans l'angle intérieur et reliant les extrémités distales des premier et deuxième éléments de support, les extrémités distales étant celles situées à l'opposé du moyeu et des extrémités de bande de roulement respectivement ;
une deuxième corps de joint élastomère comprenant une troisième composition de caoutchouc et reliant un deuxième côté du premier élément de support par son extrémité proximale au moyeu ;
un troisième corps de joint élastomère comprenant une quatrième composition de caoutchouc et reliant un deuxième côté du deuxième élément de support par son extrémité proximale à la bande, et dans laquelle les première, deuxième, troisième et quatrième compositions de caoutchouc sont basées sur des compositions de caoutchouc réticulables, les première, deuxième, troisième et quatrième compositions de caoutchouc comprenant, en parties en poids pour 100 parties en poids de caoutchouc :

entre 50 phr et 100 phr de caoutchouc naturel ;
entre 0 phr et 50 phr d'un deuxième composant de caoutchouc sélectionné à partir du groupe comprenant le caoutchouc de polybutadiène, un copolymère de polybutadiène et de styrène, le copolymère ne comportant pas plus de 5 mol% de styrène, et des combinaisons de ceux-ci ;
entre 15 phr et 40 phr d'une charge de renforcement comprenant entre 2 phr et 6 phr d'un noir de carbone et entre 20 phr et 40 phr d'un silice, le silice présentant une aire de surface comprise entre 19 m$^2$/g et 55 m$^2$/g ; et un ou plusieurs systèmes de durcissement pour les première, deuxième, troisième et quatrième compositions de caoutchouc, lesdits systèmes de durcissement pouvant être identiques ou différents ; l'un au moins parmi les deuxième et troisième corps de joint élastomères comprend en outre un talon à l'extrémité proximale des corps de joint élastomères, dans laquelle le talon est constitué d'une cinquième composition de caoutchouc, dans laquelle le talon ne représente pas plus de 25 % du volume total de l'au moins un parmi les deuxième et troisième corps de joint élastomères, et dans laquelle la cinquième composition de caoutchouc constituant le talon est basée sur des compositions de caoutchouc réticulables, lesquelles peuvent être identiques ou différentes pour chaque talon, la cinquième composition de caoutchouc comprenant, en parties de poids pour 100 parties de poids de caoutchouc :

entre 90 phr et 100 phr de caoutchouc naturel ;
jusqu'à 10 phr d'un troisième composant de caoutchouc sélectionné à partir du groupe comprenant le caoutchouc de polybutadiène, un copolymère de polybutadiène et de styrène, le copolymère ne comportant pas plus de 5 mol% de styrène, et des combinaisons de ceux-ci ;
entre 61 phr et 80 phr d'un deuxième noir de carbone ; et
un système de durcissement pour les cinquièmes compositions de caoutchouc.

2. Roue non pneumatique selon la revendication 1, comprenant en outre une membrane de renforcement reliant le deuxième côté du premier élément de support et le deuxième côté du deuxième élément de support par leurs extrémités distales.

3. Roue non pneumatique selon l'une quelconque des revendications précédentes, dans laquelle le premier élément de support et le deuxième élément de support comprennent en outre respectivement un ou plusieurs renforts revêtus de la première composition de caoutchouc.

4. Roue non pneumatique selon la revendication 3, dans laquelle les un ou plusieurs renforts pour chacun parmi les premier et deuxième éléments de support sont des cordes de plastique renforcé avec des fibres, lesquelles sont orientées entre les extrémités distales et proximales de chacun parmi les premier et deuxième éléments de support.

5. Roue non pneumatique selon l'une quelconque des revendications précédentes, dans laquelle la première composition de caoutchouc inclut 100 phr de caoutchouc naturel.

6. Roue non pneumatique selon l'une quelconque des revendications précédentes, dans laquelle la silice présente une aire de surface comprise entre 30 m$^2$/g et 55 m$^2$/g.

7. Roue non pneumatique selon l'une quelconque des revendications précédentes, dans laquelle une ou plusieurs parmi les deuxième, troisième et quatrième compositions de caoutchouc incluent 100 phr de caoutchouc naturel.

8. Roue non pneumatique selon l'une quelconque des revendications précédentes, dans laquelle une ou plusieurs parmi les deuxième, troisième et quatrième compositions de caoutchouc incluent entre 25 phr et 35 phr de la silice.

9. Roue non pneumatique selon l'une quelconque des revendications précédentes, dans laquelle la cinquième composition de caoutchouc inclut 100 phr de caoutchouc naturel.

10. Roue non pneumatique selon l'une quelconque des revendications précédentes, dans laquelle la charge de renforcement de la cinquième composition de caoutchouc est du noir de carbone.

**FIG. 1**

FIG. 2

**FIG. 3**

FIG. 4

**FIG. 5**

**FIG. 6**

**FIG. 7**

**FIG. 8**

**FIG. 9**

**FIG. 10**

**FIG. 11**

**FIG. 12**

FIG. 13

FIG. 14

27

**FIG. 15**

**FIG. 16**

**FIG. 17**

**REFERENCES CITED IN THE DESCRIPTION**

**Patent documents cited in the description**

- US 6769465 B
- US 6994134 B
- US 7013939 B
- US 7201194 B
- US 2020276866 A
- US 2020290398 A